# EUROPEAN PATENT SPECIFICATION

(11) **EP 2 503 684 B1**
(45) Date of publication and mention of the grant of the patent: **16.05.2018**
(21) Application number: 11250382.6
(22) Date of filing: 25.03.2011
(51) Int. Cl.: H02P 6/18

(54) **Control of brushless motor**
Steuerung eines bürstenlosen Motors
Commande de moteur sans balai

(43) Date of publication of application: 26.09.2012
(73) Proprietor: Pratt & Whitney Canada Corp., Longueuil, Québec J4G 1A1 (CA)
(72) Inventor: Shenouda, Antwan, Toronto, ON L5M 7Y9 (CA); Dooley, Kevin Allan, Ontario, L5C 2R6 (CA); Ma, Donglin, Mississauga, ON L5N 8H3 (CA)
(74) Representative: Dunne, Katie Rosemarie

(56) References cited:
- US-A- 5 717 299
- US-A- 5 859 512
- US-A- 5 869 944
- US-A1- 2009 009 117
- US-B1- 7 071 646

## Description

### TECHNICAL FIELD

This invention relates generally to the control of electric motors, and more particularly to systems, devices, and methods useful in the commutation of current through windings of such motors.

### BACKGROUND OF THE ART

To effectively drive a brushless direct current (BLDC) motor, a motor control system requires accurate information on the position of the rotor in relation to the stator. Sensors such as Hall effect sensors may be used to sense rotor position. However, the use of such sensors increases cost and weight, decreases reliability, and subjects the motor to temperature limitations imposed by the operational limitations of the sensors.

A form of sensorless control of BLDC motors is known; it typically involves estimation of the rotor speed and/or position based on induced electromotive force (EMF) or back-EMF occurring in a non-energized stator winding. One known technique involves monitoring zero voltage crossings in the EMF generated in the non-energized (non-driven) motor winding in order to determine the position of the rotor. The position of the rotor is then fed back to a commutating circuit to provide a proper commutation sequence to stator windings. Examples of such motors are disclosed in US Patent No. 5,057,753 to Leuthold et al. and U.S. Patent No. 5,231,338 to Bulgarelli et al. Difficulties are however encountered at high speed applications with known techniques of monitoring zero voltage crossings in the EMF generated in the non-energized motor winding. Improvement in sensorless control is therefore desirable.

US 7071646 B1 discloses a motor control circuit including a detector circuit, a comparator circuit, a sifter circuit, and a driver circuit. The detector circuit is coupled to a plurality of coils of a motor for generating a detection signal. Based on a comparison between the detection signal and a reference voltage, the comparator circuit generates a comparison signal. The sifter circuit receives in sequence a first-time crossing and a second-time crossing from the comparison signal, and generates an indication signal in response to the second-time crossing. The driver circuit controls a commutation of the motor in response to the indication signal.

US 5859512 A discloses a drive circuit for supplying drive signals to a plurality of windings of a multi-phase DC motor. The drive circuit comprises: a phase detector which samples the back-emf signal of a winding in order to obtain a phase-error signal; a low-pass filter which generates a control signal dependent upon the phase-error signal; and a controllable oscillator which generates a frequency signal with phase and frequency dependent on the control signal. The drive circuit further comprises a masking circuit for temporarily inhibiting the further processing of the phase-error signal by the low-pass filter, at least during the presence of a flyback signal in the phase-error signal, as a result of which the processing of the flyback pulses present in the phase-error signal is prevented.

US 2009/009117 discloses a brushless motor control apparatus that includes a mask processing unit to which a digital induced voltage signal is input, an energizing current timing generation processing unit, a pulse width detection unit, and an advance angle correction unit. The pulse width detection unit measures the pulse width of a spike voltage, and the advance angle correction unit calculates the correction to the advance angle according to the length of this pulse width.

US 5869944 A discloses a motor driving apparatus enabling direct pulse width modulation driving in a sensorless motor. The motor driving apparatus includes a comparison unit for comparing back-emf appearing in respective phases of a the motor, and a pulse width modulating unit for outputting pulse width modulated signals for rotationally driving the motor based upon a rotational error signal of the motor.

US 5717299 A discloses a brushless sensorless motor driving circuit. The sensorless motor driving circuit includes a detection circuit for detecting a generated induction voltage from the excitation coils; a phase-locked loop circuit for generating a clock pulse; a delay pulse generating circuit for generating a delay pulse based on the clock pulse; a switching signal generating circuit for generating conduction switching signals in accordance with the delay pulse and an output signal from the detection circuit for causing an excitation pattern of the excitation coil to be switched to another excitation pattern; and starting pulse inserting circuits for inserting a starting pulse based on the clock pulse in the detection circuit when the induction voltage is not generated.

### SUMMARY

The disclosure describes electric machines, and more particularly relates to systems, devices, and methods useful in the commutation of current through windings of electric machines.

According to a first aspect of the present invention, there is provided a method for generating a signal useful in the commutation of current through windings of a brushless electric motor, the method comprising: detecting a kickback pulse in a non-driven winding of the motor; detecting a rotor-induced zero crossing in the non-driven winding following the detection of the kickback pulse; and using the detection of the rotor-induced zero crossing to generate a signal useful in commutation of current through the windings of the motor, characterized in that the detection of the kickback pulse comprises masking a leading edge of the kickback pulse and detecting a falling edge of the kickback pulse.

According to a second aspect of the present invention, there is provided a brushless direct current electric motor comprising: a stator and a cooperating permanent magnet rotor, the stator having a plurality of windings; and circuitry configured to: detect a kickback pulse in at least one of the windings when that winding is not driven; detect a rotor-induced zero crossing in the non-driven winding following the detection of the kickback pulse; and use the detection of the rotor-induced zero crossing to generate a signal useful in control of the motor, characterized in that the circuitry is configured to mask a leading edge of the kickback pulse and detect a falling edge of the kickback pulse.

There is also disclosed herein a position sensing circuit for use in a brushless electrical motor comprising a stator and a rotor. The position sensing circuit comprises: means for detecting a kickback pulse in a non-driven winding of the stator; means for detecting a rotor-induced zero crossing in the non-driven winding following the kickback pulse; and means for using the detection of the rotor-induced zero crossing to generate a signal representative of the position of the rotor in relation to the stator.

Further details of these and other aspects of the subject matter of this application will be apparent from the detailed description and drawings included below.

### DESCRIPTION OF THE DRAWINGS

Reference is now made to the accompanying drawings, in which:
FIG. 1 is a partial schematic representation of a 3-phase sensorless brushless direct current (BLDC) motor including stator field windings;
FIG. 2 is a schematic representation of a motor drive circuit that may be used to drive a motor such as that shown in FIG. 1;
FIG. 3A shows a graphical representation of current, voltage and a digital state representative of sensed voltage in a stator field winding during operation of a motor such as that shown in FIG. 1;
FIG. 3B shows the graphical representation of FIG. 3A, illustrating aspects of masking of a kickback pulse; and
FIG. 3C shows the graphical representation of FIG. 3A, illustrating aspects of detection of a kickback pulse.

### DETAILED DESCRIPTION OF THE PREFERRED EMBODIMENTS

Various aspects of preferred embodiments are described through reference to the drawings.

The following description relates to control of a 3-phase sensorless BLDC motor and may be suited for use, for example, with machine configurations such as those described in the applicant's U.S. Patent Nos. 6,965,183; 7,262,539; 7, 288,910 and 7,443,642.

The operation of a BLDC motor can be improved through the use of accurate information on the position of the permanent magnet rotor in relation to the stator. The position of a permanent magnet rotor may be obtained using sensors such as Hall effect sensors. However, there are applications where sensorless control is desired. Benefits of the sensorless solution include, for example, the elimination of position sensors and their connections between the control system and the motor; reduced cost and weight; improved reliability and the removal of temperature limitations imposed by the operational limitations of the position sensors.

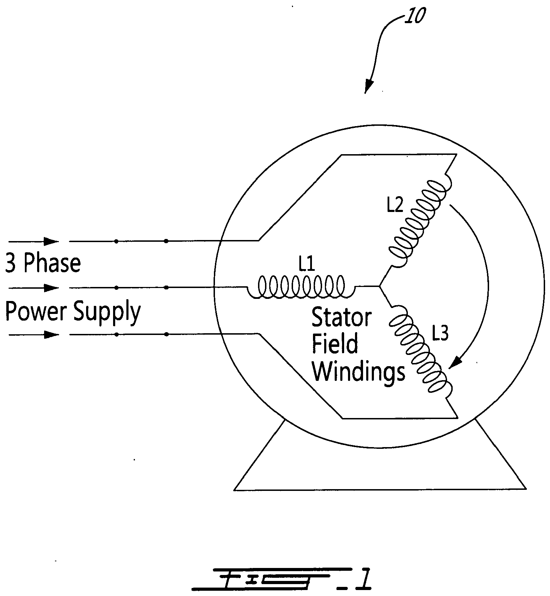

FIG. 1 shows a partial schematic representation of a 3-phase BLDC motor 10, including stator field windings L1, L2 and L3. Motor 10 may comprise a rotor (not shown) having at least one permanent magnet (not shown) in addition to a stator comprising field windings L1, L2 and L3. It is to be understood that motor 10 may be an electrical machine that may operate either as a motor or as a generator.

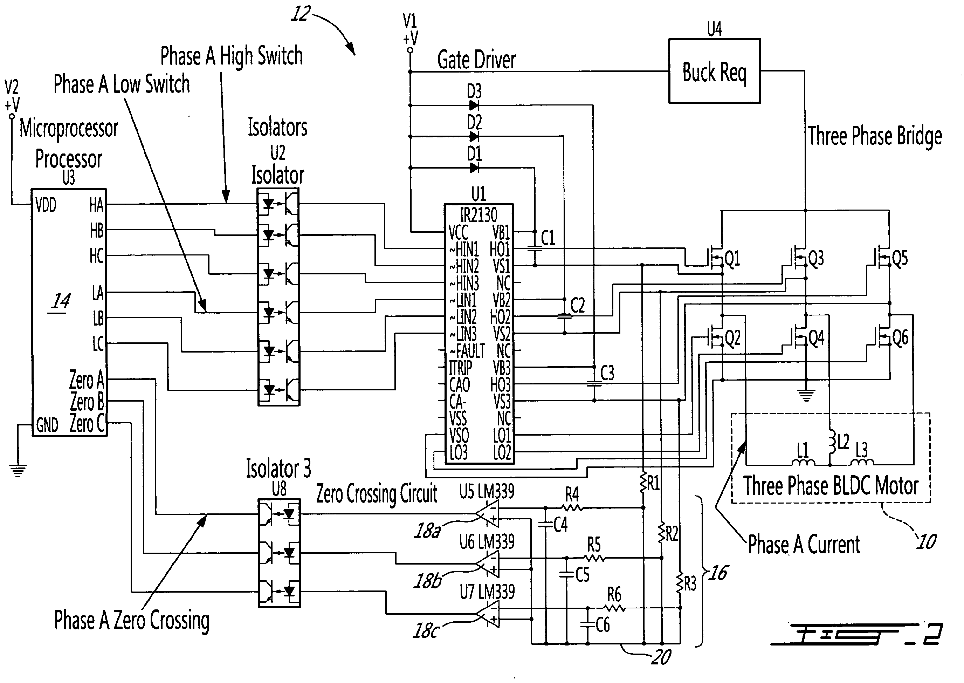

FIG. 2 shows a motor drive circuit 12 suitable for use in driving motor 10 in accordance with the invention. In the embodiment shown, drive circuit 12 includes microprocessor 14, a zero crossing circuit, generally shown at 16, and other components. Motor drive circuit 12 can further comprise circuitry useful for controlling motor 10 and commutating an input current through windings L1, L2 and L3 to cause the rotor to rotate in relation to the stator. As shown in FIG 2., the power phases commutated to field windings L1, L2 and L3 may be identified as phases A, B and C respectively.

Motor drive circuit 12 may comprise any circuit configuration suitable for zero crossing detection and for determination of rotor position that is known in the art. In an exemplary analog embodiment, zero crossing circuit 16 may be used to detect occurrences of zero crossings in at least one of windings L1, L2 and L3 of motor 10 and provide feedback to microprocessor 14 of the occurrences of zero crossings. A zero crossing occurs when a magnitude of a voltage sensed in a winding (e.g. L1, L2 or L3) changes from a positive value to a negative value or from a negative value to a positive value relative to a neutral. Accordingly, zero crossing circuit 16 may comprise voltage comparators 18a, 18b and 18c that may be used, for example, to compare one or more voltages sensed in windings L1, L2 and L3, with corresponding reference voltage(s) in order to detect zero crossings when windings L1, L2 and L3 are non-driven. The reference voltage used for comparison may for example be generated virtual neutral 20. Zero crossing circuit 16 may also comprise signal conditioning capabilities such as low-pass filtering.

In an exemplary digital embodiment, analog voltages in windings L1, L2 and L3 may be converted to digital signals and fed to an appropriate circuit for detection of the appropriate value. In any case, suitable circuitry for determining the rotor position may comprise conventional circuitry typically used in conjunction with motor systems having Hall effect position sensors.

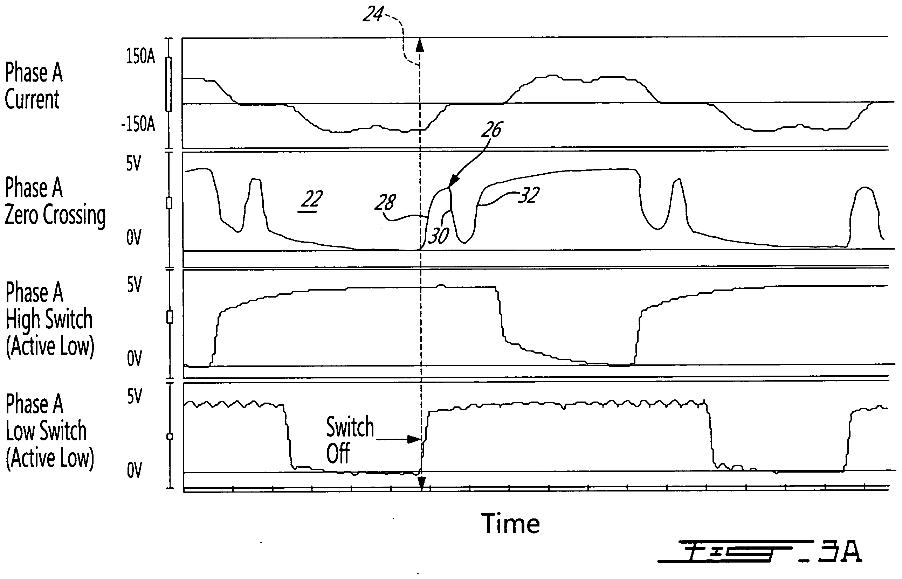

FIG 3A shows exemplary traces representative of current, voltage and a digital state representative of the sensed voltage in winding L1 (phase A) of a motor 10 during commutation. The "Phase A Zero Crossing" plot 22 of FIG. 3A shows output of a zero crossing circuit 16 as a digital state showing when the voltage in is either greater or less than zero. Thus, the output of zero crossing circuit 16 changes state as the phase A voltage crosses from either a positive voltage to a negative voltage or from a negative voltage to a positive voltage. Output from zero crossing circuit 16 is provided to microprocessor 14 for further processing and is used for commutation of motor 10.

During operation, motor 10 may be started using, for example, methods that are known in the art. Motor drive circuit 12 may be used to control motor 10 by suitably commutating input power through windings L1, L2 and L3 based on rotor position feedback received from zero crossing circuit 16. At every switching action (e.g., when current is switched off, as shown by line 24 in FIGS. 3A-3C), a kickback pulse in the voltage sensed in winding L1 (phase A), generally shown at 26, occurs in the now non-driven winding L1. Kickback pulse 26 essentially represents a voltage spike caused by residual current present when current through winding L1 is switched off. Kickback pulse 26 occurs due to the magnetic field collapse around the winding L1 as current to winding L1 is switched off and has a duration which is a function of the winding inductance and the dynamic resistance of the switching circuit (e.g. time = L/R). Kickback pulse 26 comprises two zero crossings, represented by leading edge 28 and falling edge 30. Leading edge 28 of kickback pulse 26 occurs when the current to winding L1 is first turned off and falling edge 30 of kickback pulse 26 occurs when the stored energy in winding L1 has decayed.

As the rotor rotates and the permanent magnet of the rotor passes the non-driven winding, such as winding L1 in this case, the motion of the permanent magnet relative to the winding induces back-EMF in the winding L1. Such rotor-induced back-EMF generally has a sinusoidal waveform which may be detected and used to determine the position of the rotor in relation to the stator. The rotor-induced back-EMF produces a rotor-induced zero crossing 32 when the rotor-induced back-EMF crosses from either a positive voltage to a negative voltage or from a negative voltage to a positive voltage. The rotor-induced zero crossing 32 is representative of the position of the rotor in relation to the stator, and occurs subsequent to falling edge 30 of kickback pulse 26 in FIGS. 3A-3C. The detection of rotor-induced zero crossing 32 is of particular interest because it can be used to determine an angular position of the rotor in relation to the stator without requiring a separate sensor such as an encoder or a Hall effect sensor. The detection of rotor-induced zero crossing 32 may therefore be used, by the microprocessor 14 for example, in determining the commutation order.

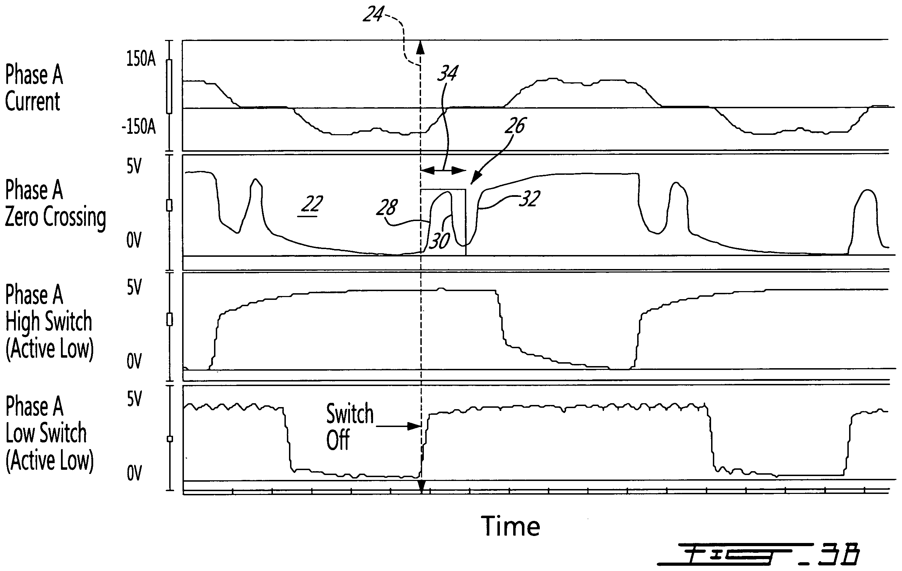

FIG. 3B illustrates a method for detecting rotor-induced zero crossing 32 which makes use of a masking delay 34. Masking delay 34 may be applied by microprocessor 14 and may be of fixed duration sufficient to ensure that the entire kickback pulse 26 has decayed before any zero crossing detection process may occur. Using this method, the first zero crossing that is detected following the delay 34 is presumably rotor-induced zero crossing 32 which follows kickback pulse 26. Masking delay 34 may be used to prevent erroneous zero crossing signals from being generated from any portion of kickback pulse 26. Basing the commutation cycle on erroneous zero crossing signals can lead to significant timing errors.

Typically, the duration of a masking delay 34 may be selected to take into account potential changes in the inductance of winding L1 and/or the resistance of the switching circuit which may affect the duration of kickback pulse 26. As a result, masking delay 34 may be selected to be longer than is strictly necessary. The use of masking delay 34 to mask the entire kickback pulse 26 may be effective for a particular speed range of motor 10, but as the speed of motor 10 increases, the time interval between falling edge 30 of kickback pulse 26 and rotor-induced zero crossing 32 is reduced. Consequently, as the speed of motor 10 approaches a certain threshold (determined, for example, by the geometry and other characteristics of the circuit components involved) there is a risk that rotor-induced zero crossing 32 may also become masked by masking delay 34. Masking rotor-induced zero crossing 32 would prevent rotor-induced zero crossing 32 from being detected and from being used to determine the commutation cycle. Hence, the use of masking delay 34 for masking kickback pulse 26 may limit the maximum speed at which motor 10 can operate.

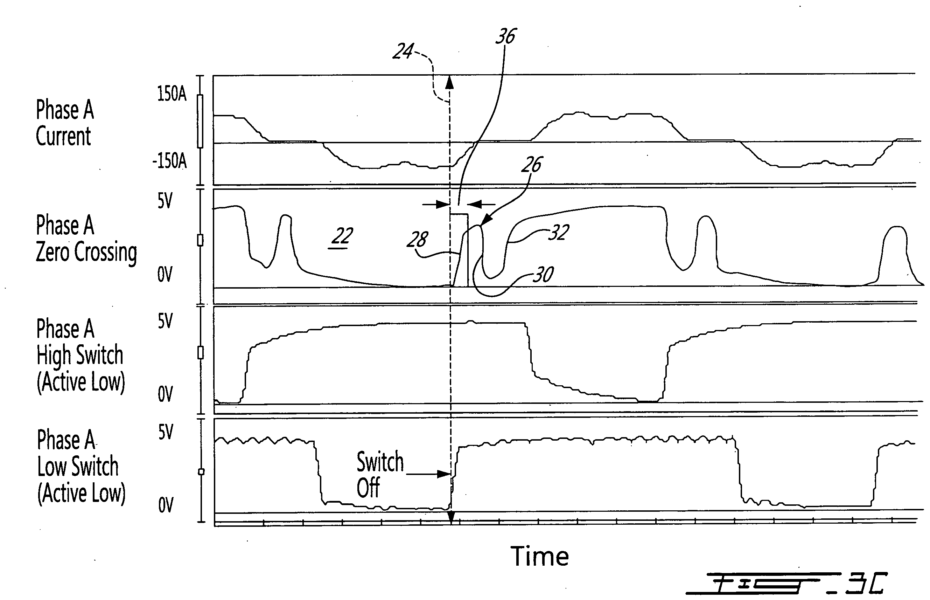

FIG. 3C is referenced to describe a novel method of detecting rotor-induced zero crossing 32 according to an exemplary embodiment. The present method may be used for generating a signal that is useful in the commutation of motor 10. The present method may detect kickback pulse 26 in non-driven winding L1, for example, instead of masking entire kickback pulse 26. Once the kickback pulse 26 has been detected, rotor-induced zero crossing 32 may be detected and the detection of rotor-induced zero crossing 32 may be used to generate a signal useful in the commutation of current through windings L1, L2 and L3 of motor 10.

In methods according to the disclosure, the detection of kickback pulse 26 may comprise masking (e.g. ignoring or blanking) only a portion of kickback pulse 26, such as only leading edge 28 of kickback pulse 26, and then detecting falling edge 30 of kickback pulse 26. Accordingly, a masking delay 36 of reduced duration may be used to mask only leading edge 28 of kickback pulse 26 as shown in FIG. 3C. Reduced masking delay 36 may be applied by microprocessor 14 when for example current to winding L1 is switched off and before initiating any zero crossing detection. As mentioned above, the detection of falling edge 30 of kickback pulse 26 and of rotor-induced zero crossing 32 may be done using zero crossing circuit 16. Once falling edge 30 of kickback pulse 26 has been detected it may be counted, and rotor-induced zero crossing 32 may be detected and used by microprocessor 14 to produce a signal useful in determining a commutation cycle of the motor 10. The detection of rotor-induced zero crossing 32 may be correlated to the position of the rotor in relation to the stator of motor 10. The signal may be used so that the excitation current provided to any one of windings L1, L2 and L3 may be properly timed and adjusted, if and as necessary, to drive windings L1, L2 and L3 to produce a desired output torque, etc. from motor 10. The detection of rotor-induced zero crossings may be conducted on any of or all of the windings L1, L2 and L3.

Among the many advantages offered by the systems and methods disclosed herein, detection of kickback pulse 26, or at least a portion of kickback pulse 26, instead of masking of the entire kickback pulse 26, significantly reduces, and in many cases practically eliminates, the risk of rotor-induced zero crossing 32 also becoming masked. Such methods and systems may also automatically adjust to variations in the duration of kickback pulse 26 caused by conditions of variable phase inductance or switching circuit resistance. Further, such methods and systems may be used to detect rotor-induced zero crossing 32 at higher operating speeds of motor 10.

According to other exemplary embodiments, kickback pulse 26 may be detected without the use of any masking delay. In such cases, leading edge 28 of kickback pulse 26 may also be detected instead of being masked. Therefore, leading edge 28 and falling edge 30 of kickback pulse 26 may be detected and counted, and then the third zero crossing detected would be rotor-induced zero crossing 32. As will be understood by those skilled in the relevant arts, in such cases the cycle time of any circuitry required for detection of zero crossings would need to be faster than the time interval between leading edge 28 and falling edge 30 of kickback pulse 26.

The above descriptions are meant to be exemplary only. Those skilled in the relevant arts will recognize that changes may be made to the embodiments described without departing from the scope of the present disclosure. For example, the method does not specifically require a 3-phase brushless DC motor but may be used with all types of brushless permanent magnet motors. A 3-phase winding may be preferred because in many cases it simplifies the associated electronics by allowing the use of commercially-available integrated circuits designed to be used with three Hall effect sensors to sense rotor position.

Methods and systems according to the disclosure may also be used in conjunction with motors serving as starter motors (not shown) driving a shaft for, as an example, starting a gas turbine engine (not shown).

Detection of the kickback pulse may be accomplished through detection of any suitable portion of the kickback pulse. The entire kickback pulse does not necessarily need to be sensed.

It will also be understood by those skilled in the relevant arts that systems and methods according to the disclosure herein may be used in conjunction with motors having either "inside rotor" or "outside rotor" configurations. Still other modifications which fall within the scope of the invention, which is defined by the claims, will be apparent to those skilled in the art, in light of a review of this disclosure.

## Claims

1. A method for generating a signal useful in the commutation of current through windings of a brushless electric motor (10), the method comprising:
detecting a kickback pulse (26) in a non-driven winding (L1-L3) of the motor;
detecting a rotor-induced zero crossing (32) in the non-driven winding following the detection of the kickback pulse; and
using the detection of the rotor-induced zero crossing to generate a signal useful in commutation of current through the windings of the motor,
**characterized in that** the detection of the kickback pulse comprises masking a leading edge (28) of the kickback pulse and detecting a falling edge (30) of the kickback pulse.

2. The method of claim 1, wherein the masking of the leading edge (28) of the kickback pulse (26) comprises the application of a delay (36).

3. The method of claim 1 or 2, wherein the detection of the falling edge (30) of the kickback pulse (26) comprises comparing a voltage sensed in the non-driven winding (L1-L3) of the motor (10) to a reference voltage (20).

4. The method of claim 1, wherein the detection of the kickback pulse (26) comprises comparing a voltage sensed in the non-driven winding (L1-L3) of the motor (10) to a reference voltage (20).

5. The method of any preceding claim, wherein the detection of the rotor-induced zero crossing (32) comprises comparing a voltage sensed in the non-driven winding (L1-L3) of the motor (10) to a reference voltage (20).

6. The method of any preceding claim, further comprising correlating the generated signal to a position of a rotor of the motor (10) in relation to a stator of the motor.

7. A brushless direct current electric motor (10) comprising:
a stator and a cooperating permanent magnet rotor, the stator having a plurality of windings (L1-L3); and
circuitry (12) configured to: detect a kickback pulse (26) in at least one of the windings when that winding is not driven; detect a rotor-induced zero crossing (32) in the non-driven winding following the detection of the kickback pulse; and use the detection of the rotor-induced zero crossing to generate a signal useful in control of the motor,
**characterised in that** the circuitry is configured to mask a leading edge (28) of the kickback pulse and detect a falling edge (30) of the kickback pulse.

8. The motor of claim 7, wherein the circuitry comprises a voltage comparator (18a-c) to compare a voltage sensed in the non-driven winding (L1-L3) of the motor (10) to a reference voltage (20) for detecting the falling edge (30).

9. The motor of claim 7 or 8, wherein the circuitry is configured to mask the leading edge (28) of the kickback pulse (26) using a masking delay (36).

10. The motor of claim 7, 8 or 9, wherein the circuitry is configured to detect the rotor-induced zero crossing (32) by comparing a voltage sensed in the non-driven winding (L1-L3) of the motor (10) to a reference voltage (20).

11. The motor of claim 10, wherein the reference voltage is a generated virtual neutral voltage (20).

12. The motor of any of claims 7 to 11 wherein the plurality of windings (L1-L3) comprise three phase windings.

13. The motor of any of claims 7 to 12 wherein the generated signal is representative of the position of the rotor in relation to the stator.

## Patentansprüche

1. Verfahren zum Erzeugen eines Signals, das nützlich für das Kommutieren von Strom durch Wicklungen eines bürstenlosen Elektromotors (10) ist, wobei das Verfahren Folgendes umfasst:
Erfassen eines Rückstoßimpulses (26) in einer nicht angetriebenen Wicklung (L1-L3) des Motors;
Erfassen eines rotorinduzierten Nulldurchgangs (32) in der nicht angetriebenen Wicklung im Anschluss an das Erfassen des Rückstoßimpulses; und
Verwenden der Erfassung des rotorinduzierten Nulldurchgangs, um ein Signal zu erzeugen, das nützlich für das Kommutieren von Strom durch die Wicklungen des Motors ist,
**dadurch gekennzeichnet, dass** das Erfassen des Rückstoßimpulses das Ausblenden einer steigenden Flanke (28) des Rückstoßimpulses und das Erfassen einer fallenden Flanke (30) des Rückstoßimpulses umfasst.

2. Verfahren nach Anspruch 1, wobei das Ausblenden der steigenden Flanke (28) des Rückstoßimpulses (26) das Anwenden einer Verzögerung (36) umfasst.

3. Verfahren nach Anspruch 1 oder 2, wobei das Erfassen der fallenden Flanke (30) des Rückstoßimpulses (26) das Vergleichen einer in der nicht angetriebenen Wicklung (L1-L3) des Motors (10) gemessenen Spannung mit einer Bezugsspannung (20) umfasst.

4. Verfahren nach Anspruch 1, wobei das Erfassen des Rückstoßimpulses (26) das Vergleichen einer in der nicht angetriebenen Wicklung (L1-L3) des Motors (10) gemessenen Spannung mit einer Bezugsspannung (20) umfasst.

5. Verfahren nach einem der vorhergehenden Ansprüche, wobei das Erfassen des rotorinduzierten Nulldurchgangs (32) das Vergleichen einer in der nicht angetriebenen Wicklung (L1-L3) des Motors (10) gemessenen Spannung mit einer Bezugsspannung (20) umfasst.

6. Verfahren nach einem der vorhergehenden Ansprüche, ferner umfassend das Korrelieren des erzeugten Signals mit einer Position eines Rotors des Motors (10) in Bezug auf einen Stator des Motors.

7. Bürstenloser Gleichstromelektromotor (10), umfassend:
einen Stator und einen mit diesem zusammenwirkenden Dauermagnetrotor, wobei der Stator eine Vielzahl von Wicklungen (L1-L3) aufweist; und
eine Schaltung (12), die zu Folgendem konfiguriert ist: Erfassen eines Rückstoßimpulses (26) in mindestens einer der Wicklungen, wenn die Wicklung nicht angetrieben wird; Erfassen eines rotorinduzierten Nulldurchgangs (32) in der nicht angetriebenen Wicklung im Anschluss an das Erfassen des Rückstoßimpulses; und Verwenden der Erfassung des rotorinduzierten Nulldurchgangs zum Erzeugen eines Signals, das nützlich für das Steuern des Motors ist,
**dadurch gekennzeichnet, dass** die Schaltung dazu konfiguriert ist, eine steigende Flanke (28) des Rückstoß-impulses auszublenden und eine fallende Flanke (30) des Rückstoßimpulses zu erfassen.

8. Motor nach Anspruch 7, wobei die Schaltung einen Spannungsvergleicher (18a-c) zum Vergleichen einer in der nicht angetriebenen Wicklung (L1-L3) des Motors (10) gemessenen Spannung mit einer Bezugsspannung (20) zum Erfassen der fallenden Flanke (30) umfasst.

9. Motor nach Anspruch 7 oder 8, wobei die Schaltung dazu konfiguriert ist, die steigende Flanke (28) des Rückstoßimpulses (26) unter Verwendung einer Ausblendungsverzögerung (36) auszublenden.

10. Motor nach Anspruch 7, 8 oder 9, wobei die Schaltung dazu konfiguriert ist, den rotorinduzierten Nulldurchgang (32) zu erfassen, indem sie eine in der nicht angetriebenen Wicklung (L1-L3) des Motors (10) gemessene Spannung mit einer Bezugsspannung (20) vergleicht.

11. Motor nach Anspruch 10, wobei die Bezugsspannung eine erzeugte virtuelle Neutralspannung (20) ist.

12. Motor nach einem der Ansprüche 7 bis 11, wobei die Vielzahl von Wicklungen (L1-L3) drei Phasenwicklungen umfasst.

13. Motor nach einem der Ansprüche 7 bis 12, wobei das erzeugte Signal die Position des Rotors in Bezug auf den Stator wiedergibt.

## Revendications

1. Procédé de génération d'un signal utile dans la commutation de courant à travers les bobines d'un moteur électrique sans balais (10), le procédé comprenant :
la détection d'une impulsion de retour (26) dans une bobine non alimentée (L1 à L3) du moteur ;
la détection d'un passage à zéro induit par le rotor (32) dans la bobine non alimentée suite à la détection de l'impulsion de retour ; et
l'utilisation de la détection du passage à zéro induit par le rotor pour générer un signal utile dans la commutation de courant à travers les bobines du moteur,
**caractérisé en ce que** la détection de l'impulsion de retour comprend le masquage d'un front avant (28) de l'impulsion de retour et la détection d'un front arrière (30) de l'impulsion de retour.

2. Procédé selon la revendication 1, dans lequel le masquage du front avant (28) de l'impulsion de retour (26) comprend l'application d'un retard (36).

3. Procédé selon la revendication 1 ou 2, dans lequel la détection du front arrière (30) de l'impulsion de retour (26) comprend la comparaison d'une tension détectée dans la bobine non alimentée (L1 à L3) du moteur (10) à une tension de référence (20) .

4. Procédé selon la revendication 1, dans lequel la détection de l'impulsion de retour (26) comprend la comparaison d'une tension détectée dans la bobine non alimentée (L1 à L3) du moteur (10) à une tension de référence (20).

5. Procédé selon une quelconque revendication précédente, dans lequel la détection du passage à zéro induit par le rotor (32) comprend la comparaison d'une tension détectée dans la bobine non alimentée (L1 à L3) du moteur (10) à une tension de référence (20).

6. Procédé selon une quelconque revendication précédente, comprenant la corrélation du signal généré avec une position d'un rotor du moteur (10) par rapport à un stator du moteur.

7. Moteur électrique sans balais à courant continu (10), comprenant :
un stator et un rotor à aimant permanent associé, le stator ayant une pluralité de bobines (L1 à L3) ; et
un circuit (12) configuré pour : détecter une impulsion de retour (26) dans au moins une des bobines lorsque cette bobine n'est pas alimentée ; détecter un passage à zéro induit par le rotor (32) dans la bobine non alimentée suite à la détection de l'impulsion de retour ; et utiliser la détection du passage à zéro induit par le rotor pour générer un signal utile dans la commande du moteur,
**caractérisé en ce que** le circuit est configuré pour masquer un front avant (28) de l'impulsion de retour et détecter un front arrière (30) de l'impulsion de retour.

8. Moteur selon la revendication 7, dans lequel le circuit comprend un comparateur de tension (18a-c) pour comparer une tension détectée dans la bobine non alimentée (L1 à L3) du moteur (10) à une tension de référence (20) afin de détecter le front arrière (30) .

9. Moteur selon la revendication 7 ou 8, dans lequel le circuit est configuré pour masquer le front avant (28) de l'impulsion de retour (26) au moyen d'un retard masquant (36).

10. Moteur selon la revendication 7, 8 ou 9, dans lequel le circuit est configuré pour détecter le passage à zéro induit par le rotor (32) en comparant une tension détectée dans la bobine non alimentée (L1 à L3) du moteur (10) à une tension de référence (20).

11. Moteur selon la revendication 10, dans lequel la tension de référence est une tension générée virtuellement neutre (20).

12. Moteur selon l'une quelconque des revendications 7 à 11, dans lequel la pluralité de bobines (L1 à L3) comprennent des bobines triphasées.

13. Moteur selon l'une quelconque des revendications 7 à 12, dans lequel le signal généré est représentatif de la position du rotor par rapport au stator.
